# EUROPEAN PATENT APPLICATION

(11) **EP 4 575 254 A1**
(43) Date of publication of application: **25.06.2025**
(21) Application number: 23020570.0
(22) Date of filing: 22.12.2023
(51) Int. Cl.: F16D 3/00, F16F 1/02, F16D 3/52, F16F 15/121

(54) **TORQUE TRANSMITTOR**

(71) Applicant: Driza, Algert, Dermenas Municipality (AL)
(72) Inventor: Driza, Algert, Fie Dermenas municipality (AL)
(74) Representative: Wittmann, Günther

(57) **Abstract**

The present invention discloses a torque transmitter apparatus (100), comprising at least one torque transmission element (101) comprising:
- a spring element (102) comprising a linear web element (104) a first partial circular element (106) and second partial circular element (108);
o wherein the first end of first partial circular element is arranged at the first end of the linear web element and the first end of the second partial circular element is arranged at the second end of the linear web element;
o wherein the second end of the linear web element is arranged opposite of the first end of the linear web element; and
o wherein the second end of the first partial circular element is located juxtaposed to the linear web element and the second end of the second partial circular element is located juxtaposed to the linear web element;

- a first axis element (134) connected to the linear web element (104) at a first side of the spring element; and
- a second axis element (118) connected on the opposite side of the first axis element to the second end of the first partial circular element and the second end of the second partial circular element (108).

## Description

### Field of the Invention

The present invention relates to a torque transmitter.

### Brief Description of the Invention

The object of the present invention is to transmit torque.

The object of the present invention is achieved by a torque transmitter apparatus according to claim 1. The dependent claims relate to preferred embodiments.

The invention discloses a torque transmitter apparatus comprising at least one torque transmission element. The torque transmission element comprises a spring element having a linear web element, a first partial circular element and second partial circular element. The first end of first partial circular element is arranged at the first end of the linear web element and the first end of the second partial circular element is arranged at the second end of the linear web element. The second end of the linear web element is arranged opposite of the first end of the linear web element. The second end of the first partial circular element is located juxtaposed to the linear web element and the second end of the second partial circular element is located juxtaposed to the linear web element. A first axis element is connected to the linear web element at a first side of the spring element. A second axis element connected on the opposite side of the first axis element to the to the second end of the first partial circular element and the second end of the second partial circular element.

The torque transmitter apparatus allows a strong and smooth transmission of a torque.

The spring element may be made one-piece (integral) from metal, such as steel.

The first axis element may comprise a first bolt and a second bolt arranged in the axial direction of the torque transmission element. The first bolt and the second bolt of the first axis element may be connected to the linear web element.

The second axis element may comprise a first bolt and a second bolt arranged in the axial direction of the torque transmission element. The first bolt of the second axis element may be connected to the second end of the first partial circular element and the second bolt of the second axis element is connected to the second end of the second partial circular element.

In one embodiment the bolt elements may be welded and/or soldered to the linear web, the first partial circular element and second partial circular element, respectively.

In another embodiment a first opening and a second opening may be formed in the linear web symmetrical to the center of the linear web. An opening may be arranged in the first partial circular element close to the second end of the first partial circular element and an opening may be arranged in the second partial circular element close to the second end of the second partial circular element. The first axis element may be connected to the first and second opening of the linear web element. The second axis element may be connected to the opening arranged in the first partial circular element close to the second end of the first partial circular element and the opening may be arranged in the second partial circular element close to the second end of the second partial circular element.

The first bolt of the first axis element may be connected with the first opening of the linear web. The second bolt of the first axis element may be connected with the second opening of the linear web.

In one embodiment the first bolt of the first axis element may be screwed to the first opening of the linear web. The second bolt of the first axis element may be screwed into the second opening of the linear web. The first and second bolt of the first axis element may be screws.

The first bolt of the second axis element may be connected with the opening of the first partial circular element. The second bolt of the second axis element may be connected with the opening of the second partial circular element.

The first bolt of the second axis element may be screwed to the opening of the first partial circular element. The second bolt of the second axis element may be screwed into the opening of the second partial circular element. The first and second bolt of the second axis element may be screws.

The torque transmitter apparatus may comprise a plurality of torque transmission elements, wherein the second axis element of a first torque transmission element is connected to the first axis element of a second torque transmission element.

The torque transmitter apparatus may comprise a bearing supporting the second axis element of a first torque transmission element and the first axis element of a second torque transmission element.

### Short description of the drawings

The invention is now explained in further detail with reference to the appended drawings showing a non-limiting embodiment, wherein
- figure 1 shows a schematic top view of a spring element;
- figure 2 shows a schematic top view of a spring element in front of a support element; and
- figure 3 is a cross section of a torque transmitter apparatus.

### Detailed description of the drawings

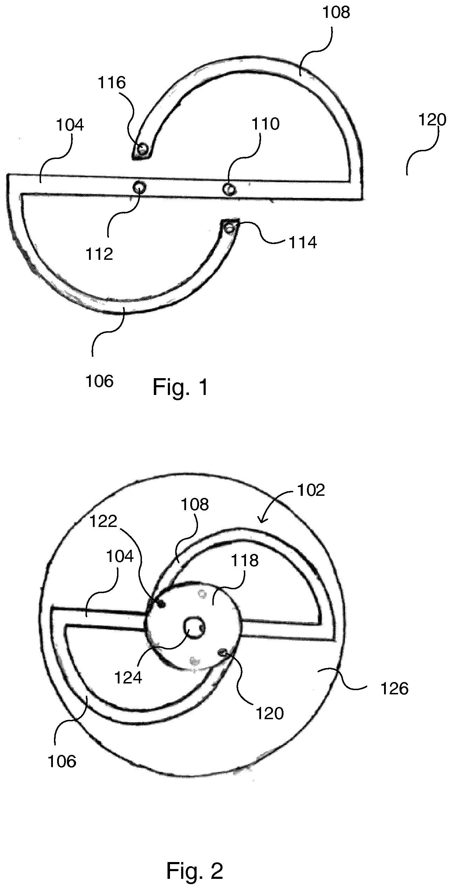

The invention is now described in more detail with reference to figures 1 and 2. The dimensions in the figures are not limiting.

Figure 1 shows a top view of a spring element according to the present invention and figure 2 shows the spring element in front of a support element.

A spring element 102 comprises a linear web or lever 104 having a first opening 110 and a second opening 112. The first and second openings are arranged symmetrical to the center of the linear web element 104.

At the first end of the linear web element 104 a first end of a first partial circular element 106 is arranged, and at the second end of the linear web 106 a first end of a second partial circular element 108 is arranged. The first partial circular element 106 may form at least 38 % of a circle, preferably at least 40 % of a circle preferably at least 83 % of a circle, but less than 48 % of a circle. The second partial circular element 108 may form at least 38 % of a circle, preferably at least 40 % of a circle preferably at least 83 % of a circle, but less than 48 % of a circle. The second end of the first partial circular element 106 and the second end of the second partial circular element 108 are arranged juxtaposed to the linear web element 104. The second end of the first partial circular element 106 and the second end of the second partial circular element 108 are located in a central portion of the linear web element 104.

The second end of the first partial circular element 106 is located at least 5%, preferably at least 10%, more preferred at least 15%, even more preferred 15% away from the center of the linear web element 104 in the length direction of the linear web element 104.

The second end of the second partial circular element 108 is located at least 5%, preferably at least 10%, more preferred at least 15%, even more preferred 15% away from the center of the linear web element 104 in the length direction of the linear web element 104.

At the second end of the first partial circular element 106 an opening 114 is formed. At the second and of the second partial circular element 108 and opening 116 is formed.

Reference is made to figure 2. A second axis element 118 comprises an axis 124, a first bolt 120 and a second bolt 122. The first bolt 120 is screwed in the opening 114 of the first partial circular element 106 and the second bolt 122 is screwed in the opening 116 of the second partial circular element 108.

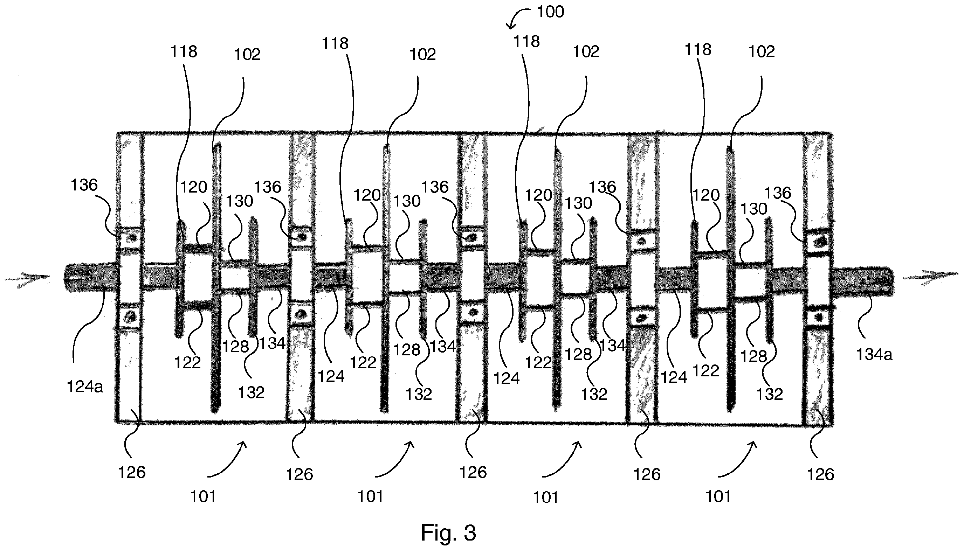

Reference is made to figure 3 showing a section of the torque transmitter apparatus 100 according to the present invention. The torque transmitter apparatus 100 comprises a plurality, namely four torque transmitter elements 101.

A torque is applied to the second axis element 124, 124a. The torque is applied to the second disc element 118, which transmits the torque via the first bolt 120 and the second bolt 122 to the spring element 102, namely via the first and second opening of the first partial circular element 106 and the second partial circular element 108.

The torque is transmitted by the linear web element 104 of the spring element 102, a first bolt 128 and a second bolt 130 of the first axis element 134 to a first disc element 132 and by the first disc element to the first axis element 134.

Then, the torque is transmitted by the first axis element 134 to the second axis element 124 of the following torque transmitter element 101. The first axis element 134a of the last torque transmitter element 101 forms the output shaft 134a.

The first axis element 134 and the second axis element 124 is supported by a bearing 136, which is supported by a circular support 126.

The input shaft 124 formed by the second axis element of the first torque transmitter element 101 can be coupled to a motor, such as an electric motor or a combustion engine, a wind turbine or the like.

The inventor of the present invention assumes that harmonic transmission of the torque is achieved by the torque transmitter apparatus 100, since the linear web element 104 of the spring element 102 acts as a lever and the first partial circular element 106 and the second partial circular element 108 act as a spring.

## Claims

1. A torque transmitter apparatus, comprising at least one torque transmission element comprising:
- a spring element comprising a linear web element a first partial circular element and second partial circular element;
∘ wherein the first end of first partial circular element is arranged at the first end of the linear web element and the first end of the second partial circular element is arranged at the second end of the linear web element;
∘ wherein the second end of the linear web element is arranged opposite of the first end of the linear web element; and
∘ wherein the second end of the first partial circular element is located juxtaposed to the linear web element and the second end of the second partial circular element is located juxtaposed to the linear web element;
- a first axis element connected to the linear web element at a first side of the spring element; and
- a second axis element connected on the opposite side of the first axis element to the to the second end of the first partial circular element and the second end of the second partial circular element.

2. The torque transmitter apparatus according to claim 1,
- wherein the first axis element comprises a first bolt and a second bolt arranged in the axial direction of the torque transmission element; and
- wherein the first bolt and the second bolt of the first axis element are connected to the linear web element.

3. The torque transmitter apparatus according to claim 1 or 2,
- wherein the second axis element comprises a first bolt and a second bolt arranged in the axial direction of the torque transmission element; and
- wherein the first bolt of the second axis element is connected to the second end of the first partial circular element and the second bolt of the second axis element is connected to the second end of the second partial circular element.

4. The torque transmitter apparatus according to anyone claims 1 to 3,
- wherein a first opening and a second opening are formed in the linear web symmetrical to the center of the linear web;
- wherein an opening is arranged in the first partial circular element close to the second end of the first partial circular element and an opening is arranged in the second partial circular element close to the second end of the second partial circular element;
- wherein the first axis element is connected to the first and second opening of the linear web element; and
- wherein the second axis element is connected to the opening arranged in the first partial circular element close to the second end of the first partial circular element and the opening is arranged in the second partial circular element close to the second end of the second partial circular element.

5. The torque transmitter apparatus according to anyone claims 2 to 4,
- wherein the first bolt of the first axis element is connected with the first opening of the linear web; and
- wherein the second bolt of the first axis element is connected with the second opening of the linear web.

6. The torque transmitter apparatus according to anyone claims 2 to 5,
- wherein the first bolt of the second axis element is connected with the opening of the first partial circular element; and
- wherein the second bolt of the second axis element is connected with the opening of the second partial circular element.

7. The torque transmitter apparatus according to any one of claims 1 to 7, comprising
- a plurality of torque transmission elements, wherein the second axis element of a first torque transmission element is connected to the first axis element of a second torque transmission element.

8. The torque transmitter apparatus according to claim 7, further comprising a bearing supporting the second axis element of a first torque transmission element and the first axis element of a second torque transmission element.
